# EUROPEAN PATENT APPLICATION

(11) **EP 3 425 184 A1**
(43) Date of publication of application: **09.01.2019**
(21) Application number: 18175939.0
(22) Date of filing: 05.06.2018
(51) Int. Cl.: F01N 13/00, F01N 5/02, F02G 5/02

(54) **HEAT ENERGY RECOVERY DEVICE**

(30) Priority: 03.07.2017 JP 2017130101
(71) Applicant: Kabushiki Kaisha Kobe Seiko Sho (Kobe Steel, Ltd.), Kobe-shi, Hyogo, 651-8585 (JP)
(72) Inventor: ADACHI, Shigeto, Takasago-shi,, Hyogo 676-8670 (JP); NARUKAWA, Yutaka, Takasago-shi,, Hyogo 676-8670 (JP); NISHIMURA, Kazumasa, Takasago-shi,, Hyogo 676-8670 (JP); ARAHIRA, Kazuya, Takasago-shi,, Hyogo 676-8670 (JP)
(74) Representative: TBK

(57) **Abstract**

A heat energy recovery device includes a heater connected to a vapor passage through which vapor flows and a circulation passage through which a working medium circulates and configured to allow heat exchange between the vapor and the working medium and heat the working medium, a recovery unit configured to recover energy of the working medium heated in the heater, a heater-side valve including a pressure adjustment valve configured to adjust vapor pressure in the heater, and a trapping mechanism configured to, at the downstream side of the heater in the vapor passage, allow discharge of drain and to prevent passage of the vapor flowing out from the heater.

## Description

### BACKGROUND OF THE INVENTION

### (FIELD OF THE INVENTION)

The present invention relates to a heat energy recovery device.

### (DESCRIPTION OF THE RELATED ART)

There has been conventionally known a device configured to recover heat energy generated from an internal combustion engine as described in JP 2016-200048 A. A heat energy recovery device described in JP 2016-200048 A is a binary power generation system that is configured to recover heat energy from exhaust gas of a diesel engine with supercharger and generate electric power by the recovered energy. The heat energy recovery device includes a heater, an expander, a generator, a condenser, a circulation pump, and pipes connecting these devices. The heat energy recovery device configures a Rankine cycle in which a working medium such as a cooling medium circulates through the pipes to the devices. In addition, the heat energy recovery device is configured such that vapor generated in an exhaust gas economizer from exhaust gas of an engine is allowed to flow into the heater and such that the working medium is heated by the vapor.

In the heat energy recovery device described in JP 2016-200048 A, the vapor generated in the exhaust gas economizer is heat-exchanged with the working medium in the heater to be condensed; therefore, drain is generated to flow out downstream of the heater. In the heat energy recovery device, the vapor that has not been condensed may flow out with the drain from the heater to freely flow through a passage located downstream of the heater. As a result, it may be difficult to effectively recover heat energy of the vapor.

Thus, the present invention is made in view of the above problem, and an object of the present invention is to provide a heat energy recovery device that can effectively recover heat energy of vapor.

A heat energy recovery device according to an aspect of the present invention includes a heater connected to a vapor passage through which vapor flows and a circulation passage through which a working medium circulates and configured to allow heat exchange between the vapor and the working medium and heat the working medium, a recovery unit configured to recover energy of the working medium heated in the heater, a heater-side valve including a pressure adjustment valve configured to adjust vapor pressure in the heater, and a trapping mechanism configured to, at the downstream side of the heater in the vapor passage, allow discharge of drain and to prevent passage of the vapor flowing out from the heater.

The above heat energy recovery device can recover heat energy of the vapor by heating the working medium by heat exchange between the vapor and the working medium in the heater and by recovering, in the recovery unit, energy of the heated working medium. In the heat energy recovery device, the trapping mechanism is provided whereby the vapor (that has not been condensed by heat exchange with the working medium) flowing out from the heater can be stemmed at the downstream side of the heater. Therefore, in the heater, condensation latent heat of the vapor can be effectively recovered. In addition, the heater-side valve is further provided whereby the pressure of the vapor, stemmed by the trapping mechanism, in the heater can be appropriately adjusted. Thus, the above heat energy recovery device maintains the vapor pressure in the heater to an appropriate pressure by the combination of the trapping mechanism and the heater-side valve and thereby can effectively recover heat energy of the vapor.

In the heat energy recovery device according to the aspect of the present invention, the heater-side valve may be a primary pressure adjustment valve arranged in a passage branched from the upstream side of the heater in the flow direction of the vapor in the vapor passage.

In such a configuration, the pressure of the vapor flowing through the branch portion in the vapor passage is adjusted by the heater-side valve whereby the vapor pressure in the heater can be easily adjusted.

In the heat energy recovery device according to the aspect of the present invention, an outlet through which the vapor to be supplied to a supply destination is taken out may be provided in the vapor passage. The heat energy recovery device may further include a supply-side valve that is a primary pressure adjustment valve arranged, in the vapor passage, downstream of the outlet in the flow direction of the vapor and upstream of the heater in the flow direction of the vapor.

In such a configuration, the heater-side valve and the supply-side valve are used concurrently; thereby, the pressure of the vapor in the heater and the pressure of the vapor to be supplied to the supply destination can be separately adjusted.

In the heat energy recovery device according to the aspect of the present invention, the heater-side valve may be configured to adjust the vapor pressure to a pressure lower than the vapor pressure of the supply-side valve.

In such a configuration, the vapor pressure in the heater can be adjusted to be low while the pressure of the vapor to be supplied to the supply destination is maintained to a desired pressure. Therefore, the saturation temperature of the vapor in the heater can be lowered. As a result, a reduction of the life of the heater due to heat damage can be inhibited.

In the heat energy recovery device according to the aspect of the present invention, the heater may be configured as a plate heat exchanger.

In such a configuration, the plate heat exchanger is utilized, and thereby the heater can save space and cost reduction can be achieved. Also, the vapor pressure in the heater is maintained constant and therefore the temperature of the vapor is maintained constant. In addition, the saturation temperature of the vapor in the heater is lowered and therefore a problem of heat resistance is not likely to occur even if the plate heat exchanger is utilized.

As is clear from the descriptions above, according to the present invention, a heat energy recovery device that can effectively recover heat energy of vapor can be provided.

### BRIEF DESCRIPTION OF THE DRAWINGS

FIG. 1 is a drawing schematically showing the configuration of a heat energy recovery device according to a first embodiment of the present invention.
FIG. 2 is a schematic view showing a state where an outflow port of a trapping mechanism is open.
FIG. 3 is a schematic view showing a state where the outflow port of the trapping mechanism is closed.
FIG. 4 is a drawing schematically showing the configuration of a heat energy recovery device according to a second embodiment of the present invention.
FIG. 5 is a drawing schematically showing the configuration of a heat energy recovery device according to a third embodiment of the present invention.

### DESCRIPTION OF THE PREFERRED EMBODIMENTS

Hereinafter, a heat energy recovery device according to embodiments of the present invention will be described in detail with reference to the drawings.

### [First embodiment]

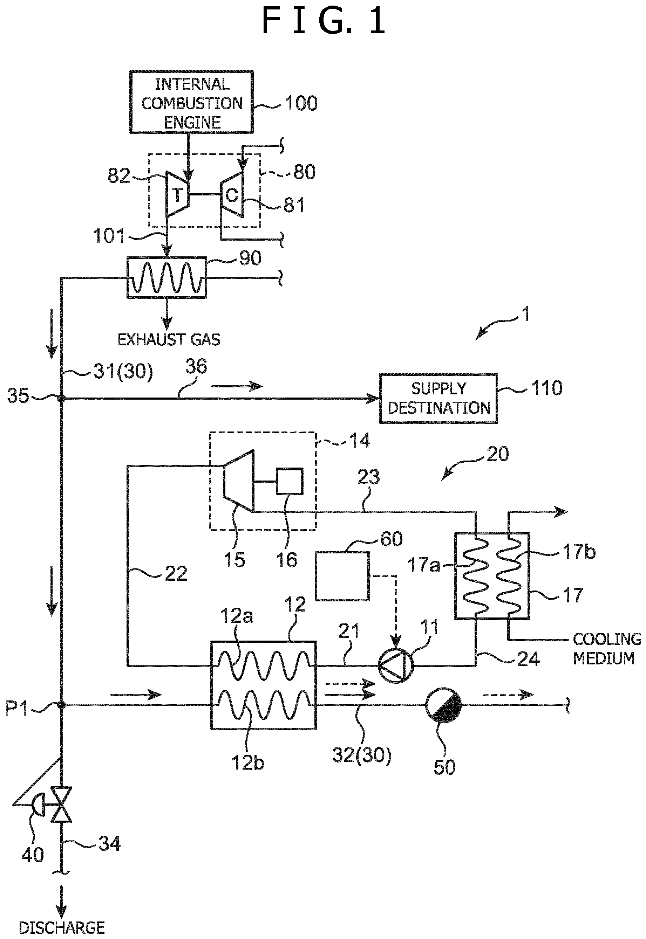

First, a heat energy recovery device 1 according to a first embodiment of the present invention will be described mainly with reference to FIG. 1. FIG. 1 schematically shows the configuration of the heat energy recovery device 1 according to the first embodiment.

The heat energy recovery device 1 is mounted, for example, on a ship and is a binary power generation system configured to recover heat energy of vapor (for example, water vapor) generated from exhaust gas of an internal combustion engine 100 for propelling the ship and generate electric power. As shown in FIG. 1, the heat energy recovery device 1 mainly includes a circulation pump 11, a heater 12, a generation system 14 that includes an expander 15 and a generator 16, a condenser 17, and a circulation passage 20 connecting these devices in the mentioned order and allowing circulation of a working medium. These components configure an Organic Rankin Cycle.

The circulation passage 20 allows the working medium discharged from the circulation pump 11 to flow through the heater 12, the expander 15, and the condenser 17 in the mentioned order and be suctioned again into the circulation pump 11. In the first embodiment, the circulation passage 20 includes first to fourth pipes 21 to 24. The working medium may include, but not limited to, a fluorocarbon medium such as R245fa.

The first pipe 21 connects a discharge port of the circulation pump 11 to an inlet for the working medium in the heater 12. The second pipe 22 connects an outlet for the working medium in the heater 12 to the expander 15. The third pipe 23 connects the expander 15 to an inlet for the working medium in the condenser 17. The fourth pipe 24 connects an outlet for the working medium in the condenser 17 to a suction port of the circulation pump 11.

The circulation pump 11 is, for example, an electric pump and is configured to apply pressure to the working medium and supply the working medium through the first pipe 21 to the heater 12. Operation of the circulation pump 11 is controlled by a control unit 60.

The heater 12 is connected to the circulation passage 20 (the first and second pipes 21, 22). The heater 12 allows heat exchange between the vapor and the working medium to heat the working medium. As shown in FIG. 1, the heater 12 includes a first flow path 12a through which the working medium supplied from the circulation pump 11 flows and a second flow path 12b through which the vapor flows. The heater 12 performs heat exchange between the working medium flowing through the first flow path 12a and the vapor flowing through the second flow path 12b. At this time, the working medium is heated by condensation latent heat of the vapor to evaporate. That is, in the first embodiment, the heater 12 functions as an evaporator configured to evaporate the working medium by heat exchange with the vapor.

The heater 12 is configured as a plate heat exchanger in the first embodiment. Thus, the heater 12 can be compactly configured to save space and cost reduction can be achieved. However, the heater is not limited to the plate heat exchanger. Alternatively, the heater may be configured, for example, as a shell and tube heat exchanger.

The generation system 14 includes a screw turbine 15 as the expander and the generator 16 connected to the turbine 15. The generation system 14 is configured such that the turbine 15 and the generator 16 are housed in a common housing (not shown). The turbine 15 is rotatably driven by a pressure difference between the pressure of the working medium flowing from the heater 12 through the second pipe 22 to the turbine 15 and the pressure of the working medium flowing out from the turbine15 through the third pipe 23 toward the condenser 17. The generator 16 generates electric power by rotation of the turbine 15 and thereby functions as a recovery unit configured to recover energy of the working medium heated in the heater 12. The recovery unit is not limited to the generator 16. Also, a displacement turbine such as a scroll turbine or a non-displacement turbine such as a centrifugal turbine are applicable as the turbine 15.

The condenser 17 includes a first flow path 17a through which the working medium flows from the expander 15 and a second flow path 17b through which a cooling medium such as cooling water flows. The cooling water is supplied by a cooling water circulation pump or the like from a cooling water source such as a cooling tower (not shown) to the second flow path 17b. The condenser 17 performs heat exchange between the working medium flowing through the first flow path 17a and the cooling medium flowing through the second flow path 17b, and thereby the working medium is cooled by the cooling medium to be condensed.

Next, the configuration to allow vapor to flow into the heater 12 will be described. As shown in FIG. 1, the internal combustion engine 100, a supercharger 80, an exhaust gas economizer 90, and a vapor passage 30 are provided in the ship. A turbine 82 of the supercharger 80, which is connected on the exhaust side of the internal combustion engine 100 is connected through an exhaust pipe 101 to the exhaust gas economizer 90. The exhaust gas economizer 90 is configured to generate vapor from exhaust gas discharged from the internal combustion engine 100.

The vapor generated in the exhaust gas economizer 90 flows through the vapor passage 30. The vapor passage 30 includes an upstream passage 31 and a downstream passage 32. As shown in FIG. 1, the upstream passage 31 includes an upstream end connected to an outlet of the exhaust gas economizer 90 and a downstream end connected to an inlet of the second flow path 12b of the heater 12. Also, the downstream passage 32 includes an upstream end connected to an outlet of the second flow path 12b of the heater 12.

In such a configuration, the vapor generated in the exhaust gas economizer 90 allows to flow through the upstream passage 31 into the second flow path 12b of the heater 12. As described above, in the heater 12, the vapor is condensed due to heat release from the vapor to the working medium and therefore drain is generated. The drain flowing out from the heater 12 flows through the downstream passage 32, and vapor flowing out from the heater 12 without being condensed remains in the downstream passage 32. In FIG. 1, the flow of vapor is indicated by solid arrows and the flow of drain is indicated by dashed arrows.

The above heat energy recovery device 1 further includes a trapping mechanism 50 arranged in the downstream passage 32 of the vapor passage 30. The trapping mechanism 50 including a steam trap is arranged at the downstream side close to the heater 12 (at a position where a pressure loss hardly occurs). As shown in FIG. 1, another device is not arranged between the heater 12 and the trapping mechanism 50 in the downstream passage 32. At the downstream side of the heater 12 in the vapor passage 30 (in the downstream passage 32), the trapping mechanism 50 allows discharge of the drain generated as a result of condensation of the vapor by heat exchange in the heater 12 and meanwhile prevents passage of the vapor flowing out from the heater 12.

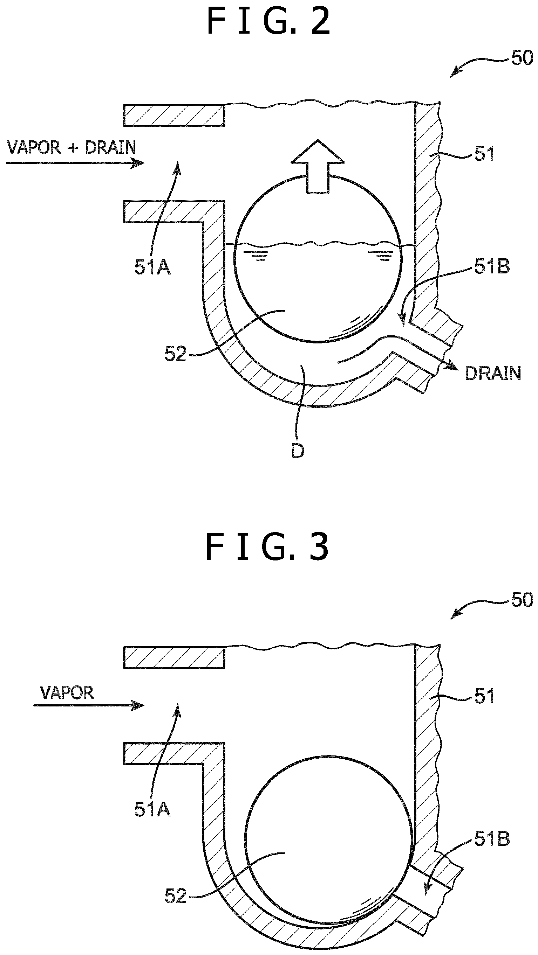

FIG. 2 and FIG. 3 schematically show the configuration of a main portion of the trapping mechanism 50 according to the first embodiment. As shown in FIG. 2 and FIG. 3, the trapping mechanism 50 includes a body 51 in which inflow and outflow ports 51A, 51B for drain are provided, and a spherical float 52 arranged in the body 51.

As shown in FIG. 2, when the vapor and the drain flow into the body 51 at the same time, the float 52 is brought into a floating state in drain D remaining in the body 51 and therefore the outflow port 51B opens. Consequently, the drain D flows out downstream through the outflow port 51B, and meanwhile, the vapor does not flow out. Also, as shown in FIG. 3, when only the vapor flows into the body 51, the float 52 is brought into a sunk state and therefore the outflow port 51B is closed by the float 52. In this case, the vapor likewise does not flow out downstream of the trapping mechanism 50. With such a configuration, the trapping mechanism 50 can prevent passage of the vapor while allowing discharge of the drain.

The foregoing trapping mechanism 50 is an important component of the heat energy recovery device 1 according to the first embodiment. The trapping mechanism 50 is provided whereby the following advantageous effects can be obtained. In other words, in a case where the trapping mechanism 50 is not provided downstream of the heater 12, the vapor flowing out from the heater 12 cannot be stemmed; therefore, it may be difficult to effectively recover condensation latent heat of the vapor. Conversely, as shown in FIG. 1, the trapping mechanism 50 is provided downstream of the heater 12; therefore, the drain is allowed to flow and meanwhile, the vapor flowing out from the heater 12 can be stemmed in the downstream passage 32. In other words, heat energy is recovered from the vapor and thereafter the vapor is condensed into a vapor component (drain), and the vapor component (drain) is allowed to flow out downstream. In addition, a vapor component from which heat energy has not been recovered can be prevented from flowing out. Thus, a vapor-phase component can be prevented from flowing through the downstream passage 32, and the vapor can be surely condensed in the heater 12. As a result, in the heater 12, condensation latent heat of the vapor can be effectively recovered.

In addition, the trapping mechanism according to the present invention is not limited to a free float steam trap, as shown in FIG. 2 and FIG. 3. A steam trap of the various types such as a lever float type, a bucket type, a bellows type, and a diaphragm type may be applied as the trapping mechanism.

As shown in FIG. 1, a discharge passage 34 for discharging the vapor to the outside is provided to be branched from the upstream passage 31 of the vapor passage 30. The foregoing heat energy recovery device 1 further includes a heater-side valve 40 arranged in the discharge passage 34. The heater-side valve 40 is configured to adjust pressure of the vapor in the heater 12 to a predetermined set pressure.

The heater-side valve 40 is a primary pressure adjustment valve and is configured to adjust pressure of the vapor upstream of the position of the heater-side valve 40 to the predetermined set pressure. More specifically, when the pressure of the vapor upstream of the position of the heater-side valve 40 is lower than the set pressure, the heater-side valve 40 is configured to close. When the pressure of the vapor upstream of the position of the heater-side valve 40 is higher than the set pressure, the heater-side valve 40 is configured to open. Therefore, the pressure of the vapor flowing through the upstream passage 31 of the vapor passage 30 is adjusted to the set pressure of the heater-side valve 40. As a result, the pressure of the vapor in the heater 12 can be also adjusted to the set pressure. In the first embodiment, the set pressure of the heater-side valve 40 is defined, for example, as 0.6 MPaG (gauge pressure). In addition to the above trapping mechanism 50, the heat energy recovery device 1 according to the first embodiment further includes the heater-side valve 40; therefore, the pressure of the vapor, stemmed by the trapping mechanism 50, in the heater 12 can be appropriately adjusted.

As shown in FIG. 1, an outlet 35 through which the vapor to be supplied to a supply destination 110 in the ship is taken out from the vapor passage 30, is provided upstream of a branch point P1 of the discharge passage 34 in the flow direction of the vapor in the upstream passage 31 of the vapor passage 30. One end of a supply passage 36 through which the vapor is guided to the supply destination 110 in the ship is connected to the outlet 35. A soot blower device is cited as an example of the supply destination 110. The soot blower device can clean, for example, a ballast tank, a cargo room, a deck, or the like with vapor. In the first embodiment, the vapor adjusted to 0.6 MPaG (gauge pressure) by the heater-side valve 40 is supplied through the supply passage 36 to the supply destination 110.

Here, the features of the heat energy recovery device 1 according to the first embodiment as described above will be cited.

The heat energy recovery device 1 is connected to the vapor passage 30 through which vapor flows and the circulation passage 20 through which a working medium circulates. The heat energy recovery device 1 includes the heater 12 configured to allow heat exchange between the vapor and the working medium and heat the working medium, the generator 16 (recovery unit) configured to recover energy of the working medium heated in the heater 12, the heater-side valve 40 including the pressure adjustment valve configured to adjust pressure of the vapor in the heater 12, and the trapping mechanism 50 configured to, at the downstream of the heater 12 in the vapor passage 30, allow discharge of drain generated as a result of condensation of the vapor by the heat exchange and to prevent passage of the vapor flowing out from the heater 12.

The heat energy recovery device 1 can recover heat energy of the vapor by allowing heat exchange between the vapor and the working medium in the heater 12 to heat the working medium and by recovering energy of the heated working medium in the generator 16. The trapping mechanism 50 is provided in the heat energy recovery device 1 and thereby the vapor flowing out from the heater 12 can be stemmed in the downstream passage 32. Thus, a decrease of the pressure of the vapor in the heater 12 is inhibited and condensation latent heat of the vapor can be effectively recovered. In addition, the heater-side valve 40 is further provided and thereby the pressure of the vapor, stemmed by the trapping mechanism 50, in the heater 12 can be adjusted to an appropriate set pressure. Consequently, the heat energy recovery device 1 can maintain the pressure of the vapor in the heater 12 to the appropriate set pressure by the combination of the trapping mechanism 50 and the heater-side valve 40 and can effectively recover heat energy of the vapor.

In the heat energy recovery device 1, the heater-side valve 40 is the primary pressure adjustment valve that is arranged in the discharge passage 34 branched from the upstream passage 31 of the vapor passage 30. Accordingly, the pressure of the vapor flowing through the branch point P1 in the vapor passage 30 (the upstream passage 31) is adjusted by the heater-side valve 40; therefore, the pressure of the vapor in the heater 12 can be easily adjusted.

In the heat energy recovery device 1, the heater 12 is configured as a plate heat exchanger; therefore, the heater 12 can save space and cost reduction can be achieved.

### [Second embodiment]

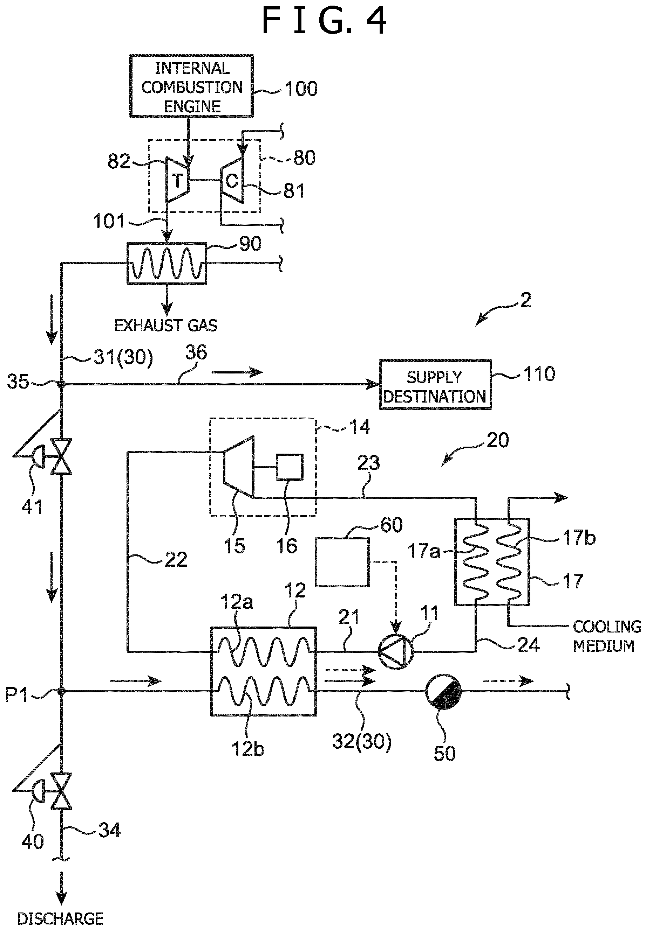

Next, a heat energy recovery device 2 according to a second embodiment of the present invention will be described with reference to FIG. 4. The heat energy recovery device 2 according to the second embodiment basically includes the same configuration as the configuration of the heat energy recovery device 1 according to the first embodiment, but the heat energy recovery device 2 is different from the heat energy recovery device 1 according to the first embodiment in that the heat energy recovery device 2 further includes a supply-side valve 41. Hereinafter, only differences from the heat energy recovery device 1 according to the first embodiment will be described.

As shown in FIG. 4, the heat energy recovery device 2 according to the second embodiment includes the supply-side valve 41 located, in the vapor passage 30 (the upstream passage 31), downstream of the outlet 35 in the flow direction of the vapor and upstream of the heater 12 in the flow direction of the vapor. More specifically, the supply-side valve 41 is arranged, in the upstream passage 31, downstream of the outlet 35 in the flow direction of the vapor and upstream of the branch point P1 of the discharge passage 34 in the flow direction of the vapor.

The supply-side valve 41 is a primary pressure adjustment valve in the same way as the heater-side valve 40 and is configured to adjust pressure of the vapor upstream of the position of the supply-side valve 41 to a predetermined set pressure. Specifically, when the pressure of the vapor upstream of the position of the supply-side valve 41 is lower than the set pressure, the supply-side valve 41 is configured to close. When the pressure of the vapor upstream of the position of the supply-side valve 41 is higher than the set pressure, the supply-side valve 41 is configured to open. Therefore, the pressure of the vapor in the heater 12 can be adjusted by the heater-side valve 40 in the same way as in the first embodiment. In addition, the pressure of the vapor to be supplied from the outlet 35 through the supply passage 36 to the supply destination 110 in the ship can be adjusted to the set pressure of the supply-side valve 41.

As just described, in the second embodiment, the heater-side valve 40 and the supply-side valve 41 are used concurrently; thereby, the pressure of the vapor in the heater 12 and the pressure of the vapor to be supplied to the supply destination 110 in the ship can be separately adjusted. In other words, the pressure of the vapor in the heater 12 can be adjusted by the heater-side valve 40 while the pressure of the vapor to be supplied to the supply destination 110 in the ship can be adjusted by the supply-side valve 41.

Also, in the second embodiment, the heater-side valve 40 is configured to adjust the vapor pressure to a pressure lower than the vapor pressure of the supply-side valve 41. That is, the set pressure of the heater-side valve 40 is lower than the set pressure of the supply-side valve 41. Specifically, the set pressure of the heater-side valve 40 is 0.17 MPaG (gauge pressure) while the set pressure of the supply-side valve 41 is 0.6 MPaG (gauge pressure).

The vapor pressure obtained in the supply destination 110 in the ship is approximately 0.6 MPaG which can be achieved by the supply-side valve 41. Meanwhile, the vapor pressure in the heater 12 can be decreased to 0.17 MPaG by the heater-side valve 40. Thus, the saturation temperature of the vapor in the heater 12 can be lowered (from about 160 to about 130 degrees C) compared with the first embodiment. As a result, a reduction of the life of the heater 12 due to heat damage can be inhibited. In particular, in a case where the heater 12 is configured as a plate heat exchanger, heat resistance of packing for sealing a clearance between plates or of copper brazing may become a problem. Contrarily, the saturation temperature of the vapor in the heater 12 is lowered as described above; thereby, the reduction of the life can be inhibited.

### [Third embodiment]

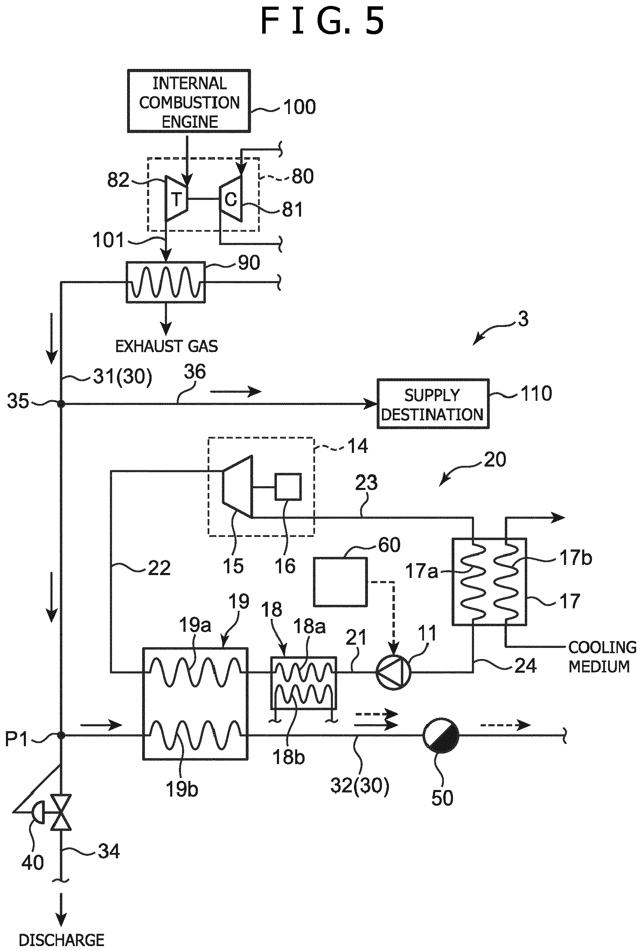

Next, a heat energy recovery device 3 according to a third embodiment of the present invention will be described with reference to FIG. 5. The heat energy recovery device 3 according to the third embodiment basically includes the same configuration as the configuration of the heat energy recovery device 1 according to the first embodiment, but the heat energy recovery device 3 is different from the heat energy recovery device 1 according to the first embodiment in that a heater is utilized not as an evaporator but as a superheater. Hereinafter, only differences from the heat energy recovery device 1 according to the first embodiment will be described.

As shown in FIG. 5, the heat energy recovery device 3 according to the third embodiment includes an evaporator 18 and a heater 19 arranged downstream of the evaporator 18 in the flow direction of a working medium and functioning as a superheater. The evaporator 18 includes a first flow path 18a through which the working medium from the circulation pump 11 flows and a second flow path 18b through which air via a compressor 81 of the supercharger 80 flows. The evaporator 18 performs heat exchange between the working medium flowing through the first flow path 18a and the air flowing through the second flow path 18b, thereby evaporating the working medium.

The heater 19 includes a first flow path 19a through which the working medium from the evaporator 18 flows and a second flow path 19b through which vapor supplied through the vapor passage 30 (the upstream passage 31) flows. The heater 19 performs heat exchange between the working medium flowing through the first flow path 19a and the vapor flowing through the second flow path 19b.

Also, the heat energy recovery device 3 according to the third embodiment may include the supply-side valve 41 in the same way as in the second embodiment 2.

### [Other embodiments]

Finally, other embodiments according to the present invention will be described.

In the aforementioned first embodiment, a case where the heat energy recovery device of the present invention recovers heat energy of vapor generated in the exhaust gas economizer 90 is described, but the heat energy recovery device is not limited thereto. Alternatively, the heat energy recovery device may be utilized, for example, to recover heat energy of vapor generated in a boiler in the ship. In this case, the boiler is connected to the upstream end of the upstream passage 31.

Also, the heat energy recovery device of the present invention is not limited to the recovery of heat energy of vapor generated in the ship. Alternatively, the heat energy recovery device can be applied, for example, in a power generation system using heat energy of industrial waste vapor or excess vapor generated in a chemical plant or the like, recovery of heat energy of vapor generated in a biomass boiler, or geothermal generation using heat energy of vapor generated in hot springs.

In the aforementioned first embodiment, a case where the heater-side valve 40 is a primary pressure adjustment valve is described, but the heat energy recovery device of the present invention is not limited thereto. Alternatively, the heater-side valve 40 may be a secondary pressure adjustment valve (pressure reducing valve). In this case, the heater-side valve 40 is arranged not in the discharge passage 34 but in the upstream passage 31 of the vapor passage 30.

The embodiments described herein should be given by way of illustration in all respects and not by way of limitation. The scope of the present invention is indicated not by the descriptions above but by the claims, and the present invention is intended to include the claims and the meaning of equivalents, and all changes within the scope of the present invention.

A heat energy recovery device includes a heater connected to a vapor passage through which vapor flows and a circulation passage through which a working medium circulates and configured to allow heat exchange between the vapor and the working medium and heat the working medium, a recovery unit configured to recover energy of the working medium heated in the heater, a heater-side valve including a pressure adjustment valve configured to adjust vapor pressure in the heater, and a trapping mechanism configured to, at the downstream side of the heater in the vapor passage, allow discharge of drain and to prevent passage of the vapor flowing out from the heater.

## Claims

1. A heat energy recovery device comprising:
a heater connected to a vapor passage through which vapor flows and a circulation passage through which a working medium circulates, the heater being configured to allow heat exchange between the vapor and the working medium and heat the working medium;
a recovery unit configured to recover energy of the working medium heated in the heater;
a heater-side valve including a pressure adjustment valve configured to adjust vapor pressure in the heater; and
a trapping mechanism configured to, at the downstream side of the heater in the vapor passage, allow discharge of drain and to prevent passage of the vapor flowing out from the heater.

2. The heat energy recovery device according to claim 1, wherein the heater-side valve is a primary pressure adjustment valve arranged in a passage branched from the upstream side of the heater in the flow direction of the vapor in the vapor passage.

3. The heat energy recovery device according to claim 1 or 2, wherein an outlet through which the vapor to be supplied to a supply destination is taken out is provided in the vapor passage, and
the heat energy recovery device further includes a supply-side valve that is a primary pressure adjustment valve arranged, in the vapor passage, downstream of the outlet in the flow direction of the vapor and upstream of the heater in the flow direction of the vapor.

4. The heat energy recovery device according to claim 3, wherein the heater-side valve is configured to adjust the vapor pressure to a pressure lower than the vapor pressure of the supply-side valve.

5. The heat energy recovery device according to any one of claims 1 to 4, wherein the heater is configured as a plate heat exchanger.
